# EUROPEAN PATENT SPECIFICATION

(11) **EP 4 470 894 B1**
(45) Date of publication and mention of the grant of the patent: **23.07.2025**
(21) Application number: 23213936.0
(22) Date of filing: 04.12.2023
(51) Int. Cl.: B62K 23/08

(54) **STRADDLED VEHICLE**
GRÄTSCHSITZFAHRZEUG
VÉHICULE À SELLE

(30) Priority: 02.06.2023 JP 2023091564
(43) Date of publication of application: 04.12.2024
(73) Proprietor: Yamaha Hatsudoki Kabushiki Kaisha, Iwata-shi, Shizuoka 438-8501 (JP)
(72) Inventor: INOUE, Yuichi, Iwata-shi, 4388501 (JP)
(74) Representative: Studio Torta S.p.A.

(56) References cited:
- JP-U- S50 137 750
- JP-U- S58 103 998
- US-B2- 10 730 587
- US-B2- 8 733 205

## Description

### Technical field

The present invention relates to a straddled vehicle.

### Prior art

Some straddled vehicles are equipped with a shift pedal. The shift pedal is rotatably attached to the straddled vehicle. A rider changes gears in the transmission by operating the shift pedal with his or her foot. For example, as in Japan Registered Utility Model Publication No. 3007864, the shift pedal includes a pedal tread portion and a cover. The pedal tread portion projects to the side of the vehicle and has a cylindrical shape. The cover is made of rubber and is attached to cover the pedal tread portion. The cover has a cylindrical shape. For example, the rider shifts up a gear by pushing up the shift pedal with his or her foot from below. The rider downshifts the gear by pressing down on the shift pedal with his or her foot from above. Document JPS50137750U, which is considered being the closest prior art, shows a shift pedal attached to the vehicle body, wherein the shift pedal includes a shaft portion rotatably supported by the vehicle body, an arm portion extending in a front-rear direction of the vehicle from the shaft portion, a pedal tread portion projecting laterally from the arm portion, and a cover that is made of an elastic material and covers the pedal tread portion, and the pedal tread portion is made of sheet metal and has an upwardly curved shape.

### Description of the invention

As described above, when the shift pedal is cylindrical, the rider's foot moves a long distance when operating the shift pedal. In order to improve the operability of the shift pedal, it is desirable that the rider's foot moves a small distance when operating the shift pedal. However, when the diameter of the pedal tread portion is reduced, the rigidity of the shift pedal is reduced. Furthermore, if the cover is made thin, the cushioning properties for the rider's foot will be reduced. An object of the present invention is to improve the operability of the shift pedal while suppressing a decrease in the rigidity of the shift pedal and a decrease in cushioning properties of the cover.

A straddled vehicle according to one aspect of the present invention includes a vehicle body and a shift pedal. The shift pedal is attached to the vehicle body. The shift pedal includes a shaft portion, an arm portion, a pedal tread portion, and a cover. The shaft portion is rotatably supported by the vehicle body. The arm portion extends in a front-rear direction of the vehicle from the shaft portion. The pedal tread portion projects laterally from the arm portion. The cover is made of an elastic material and covers the pedal tread portion. The pedal tread portion is made of sheet metal and has an upwardly convex bent shape.

According to the straddled vehicle according to the present aspect, the pedal tread portion is made of sheet metal and has an upwardly convex bent shape. Therefore, compared to a case where the pedal tread portion is cylindrical, the thickness of the pedal tread portion can be made thinner while suppressing a decrease in rigidity. Further, due to the shape of the pedal tread portion described above, it is possible to provide a large thickness of the portion of the cover located below the pedal tread portion while suppressing an increase in the thickness of the entire cover. This improves shift pedal operability while suppressing deterioration in cushioning properties.

The bottom surface of the pedal tread portion may have an upwardly concave shape. In this case, the thickness of the portion of the cover located below the pedal tread portion can be provided to be large. This improves cushioning properties.

The cover may include a lower cover portion and an upper cover portion. The lower cover portion may be located below the pedal tread portion. The upper cover portion may be located above the pedal tread portion. The thickness of the lower cover portion in the vertical direction may be larger than the thickness of the upper cover portion in the vertical direction. In this case, cushioning properties when operating the shift pedal are improved.

The cover may include an upper curved surface and a lower curved surface. The upper curved surface may be provided on the upper surface of the cover and may be curved convexly upward. The lower curved surface may be provided on the lower surface of the cover and curved convexly downward. In this case, cushioning properties when operating the shift pedal are improved.

The curvature of the lower curved surface may be greater than the curvature of the upper curved surface. In this case, the shift pedal can be made thinner while improving the cushioning properties when operating the shift pedal. This improves the operability of the shift pedal.

The straddled vehicle may further include a foot step. The foot step may be located behind the shift pedal. As seen in the vehicle side view, a point of contact between the cover and a first tangent line that passes through a predetermined position on the foot step and contacts the cover from above is defined as an upper contact point. As seen in the vehicle side view, a point of contact between the cover and a second tangent line that passes through the predetermined position on the foot step and contacts the cover from below is defined as a lower contact point. As seen in the vehicle side view, a direction in which a straight line connecting the upper contact point and the lower contact point extends is defined as an operating direction of the rider's foot. As seen in the vehicle side view, a dimension of the cover in the operating direction may be smaller than a dimension of the cover in a direction perpendicular to the operating direction. In this case, the shift pedal operability is improved by reducing a distance of foot movement.

### Brief description of the drawings

FIG. 1 is a side view of a straddled vehicle according to an embodiment.
FIG. 2 is a perspective view of a shift pedal.
FIG. 3 is a top view of the shift pedal.
FIG. 4 is a side view of the shift pedal.
FIG. 5 is a perspective view of a pedal body.
FIG. 6 is an enlarged view of the pedal body showing q vicinity of a pedal tread portion.
FIG. 7 is an enlarged view of the pedal body showing the vicinity of the pedal tread portion.
FIG. 8 is an enlarged view of the pedal body showing the vicinity of the pedal tread portion.
FIG. 9 is an enlarged view of the shift pedal showing a cover and the vicinity of the pedal tread portion.
FIG. 10 is a perspective view of the cover.
FIG. 11 is a side view of the shift pedal showing a definition of an operating direction of the shift pedal.
FIG. 12 is a sectional view taken along line XII-XII of the shift pedal in FIG. 9.
FIG. 13 is a sectional view of a shift pedal according to a modified example. Embodiments of the invention

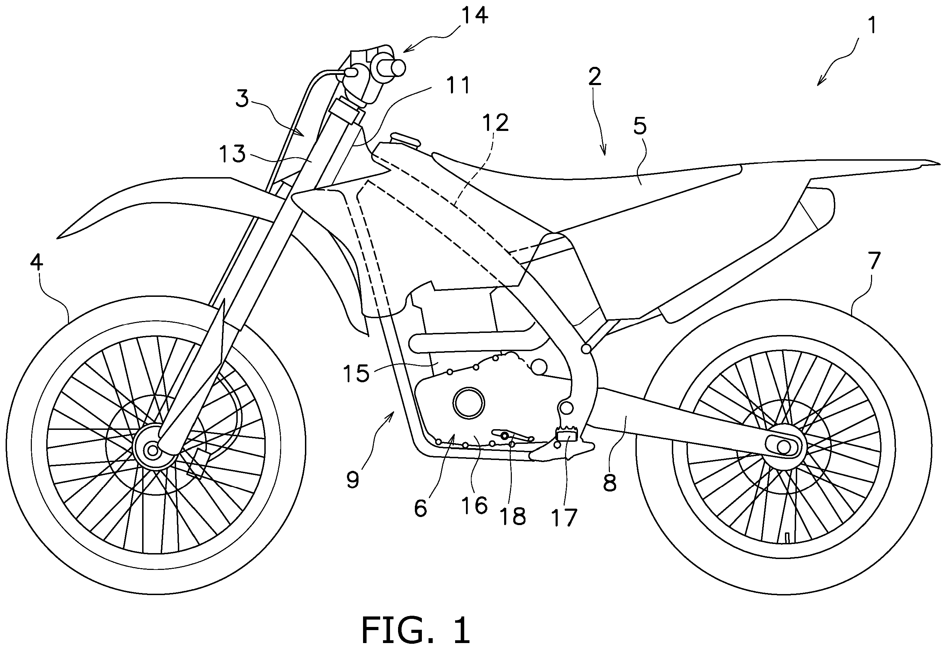

Hereinafter, a straddled vehicle according to an embodiment will be described with reference to the drawings. FIG. 1 is a side view of a straddled vehicle 1 according to an embodiment. The straddled vehicle 1 is a so-called off-road type motorcycle. As shown in FIG. 1, the straddled vehicle 1 includes a vehicle body 2. The vehicle body 2 includes a steering device 3, a front wheel 4, a seat 5, a power unit 6, a rear wheel 7, a swing arm 8, and a vehicle body frame 9. In the present embodiment, the front, rear, left, and right directions refer to the front, rear, left, and right directions as viewed from a rider seated on the seat 5.

The vehicle body frame 9 includes a head pipe 11 and a main frame 12. The head pipe 11 extends forward and downward. The main frame 12 is connected to the head pipe 11.

The steering device 3 is rotatably supported by the head pipe 11. The steering device 3 is configured to be steered by a rider. The steering device 3 includes a front fork 13 and a handle member 14. The front fork 13 rotatably supports the front wheel 4. The front fork 13 is rotatably supported by the head pipe 11. The handle member 14 is connected to the front fork 13. The handle member 14 is operable left and right by a rider.

The seat 5 is arranged behind the head pipe 11. The seat 5 is supported by the vehicle body frame 9. The power unit 6 is arranged below the seat 5. The power unit 6 is supported by the main frame 12. The power unit 6 generates driving force to rotate the rear wheel 7. The power unit 6 includes an engine 15 and a transmission 16.

The rear wheel 7 is arranged behind the power unit 6. The rear wheel 7 is connected to the main frame 12 via the swing arm 8. The swing arm 8 is swingably supported by the main frame 12. The rear wheel 7 is rotatably supported by the swing arm 8.

A foot step 17 and a shift pedal 18 are arranged below the seat 5. The foot step 17 is arranged behind the shift pedal 18. A rider's foot is placed on the foot step 17. The foot step 17 is connected to the main frame 12. The foot step 17 projects laterally from the main frame 12.

The shift pedal 18 is rotatably attached to the vehicle body 2. The shift pedal 18 is attached to the transmission 16, for example. Note that the shift pedal 18 is not limited to be attached to the transmission 16, and may be attached to other parts such as the vehicle body frame 9. The shift pedal 18 is operated by a rider's foot. By operating the shift pedal 18, the gear of the transmission 16 is changed.

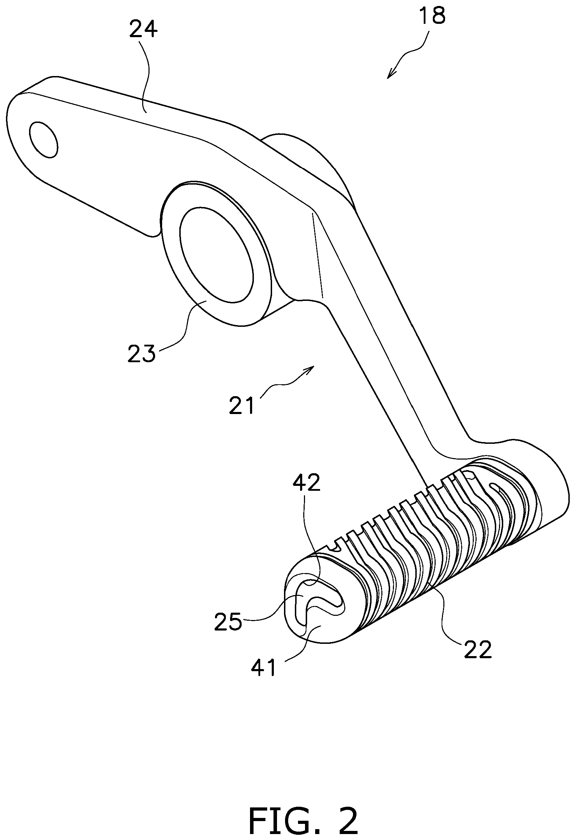

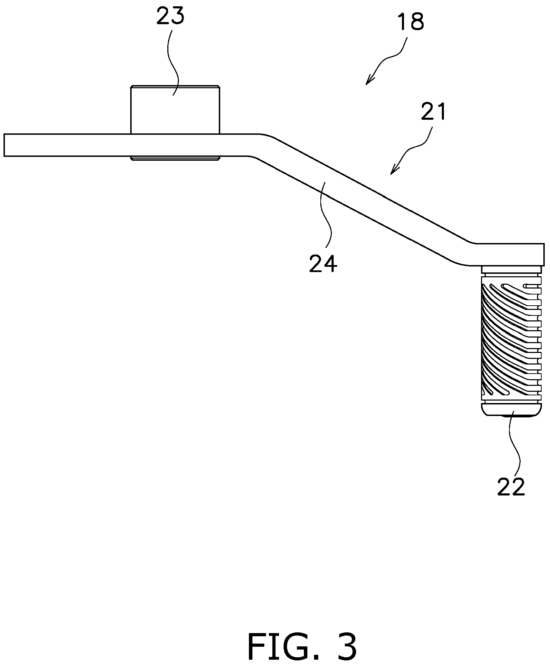

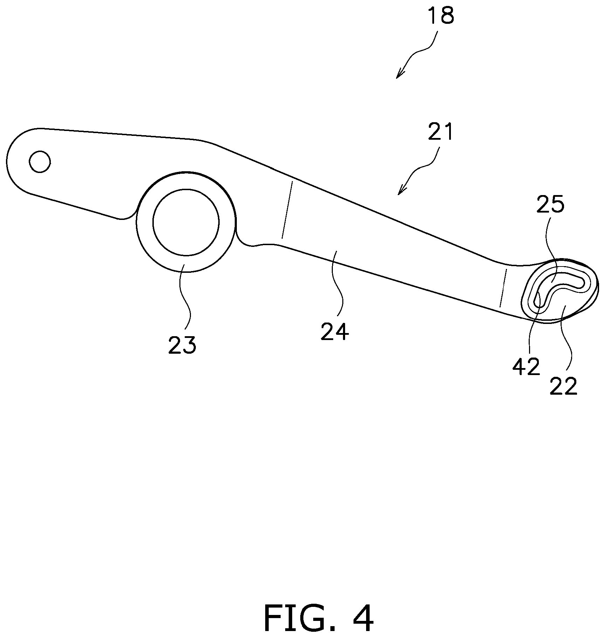

FIG. 2 is a perspective view of the shift pedal 18. FIG. 3 is a top view of the shift pedal 18. FIG. 4 is a side view of the shift pedal 18. As shown in FIGS. 2 to 4, the shift pedal 18 includes a pedal body 21 and a cover 22. The pedal body 21 is rotatably attached to the vehicle body 2. The pedal body 21 is made of metal such as aluminum.

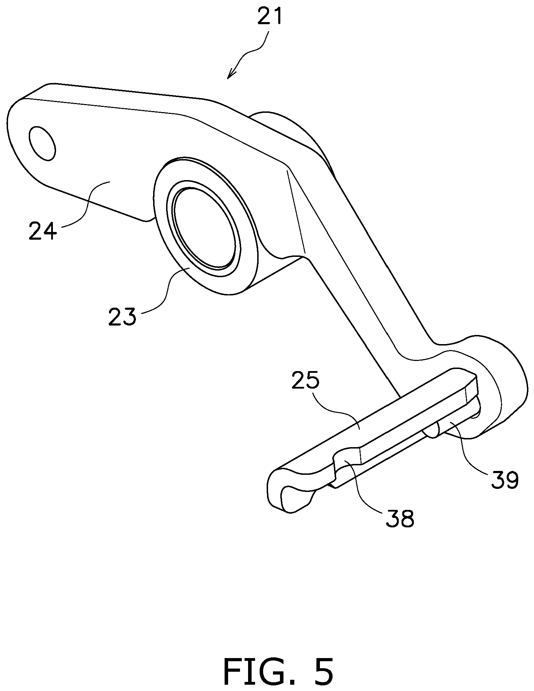

FIG. 5 is a perspective view of the pedal body 21. As shown in FIG. 5, the pedal body 21 includes a shaft portion 23, an arm portion 24, and a pedal tread portion 25. The shaft portion 23 is rotatably supported by the vehicle body 2. The shaft portion 23 projects laterally from the arm portion 24. The arm portion 24 has a plate shape. The arm portion 24 extends from the shaft portion 23 in the front-rear direction.

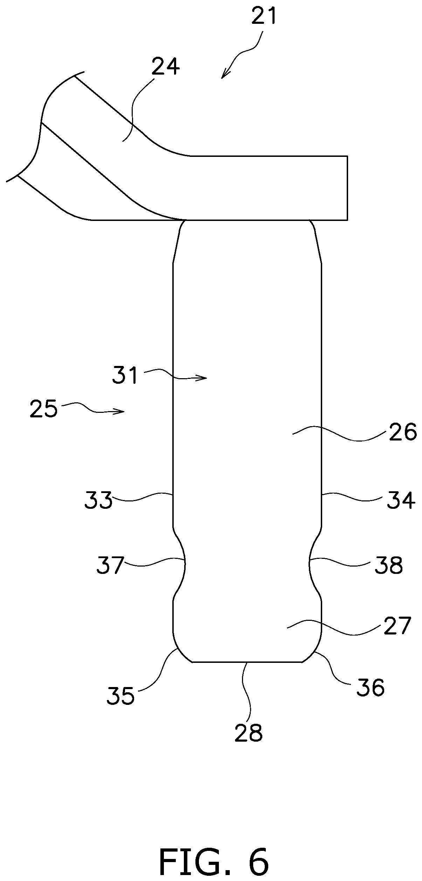

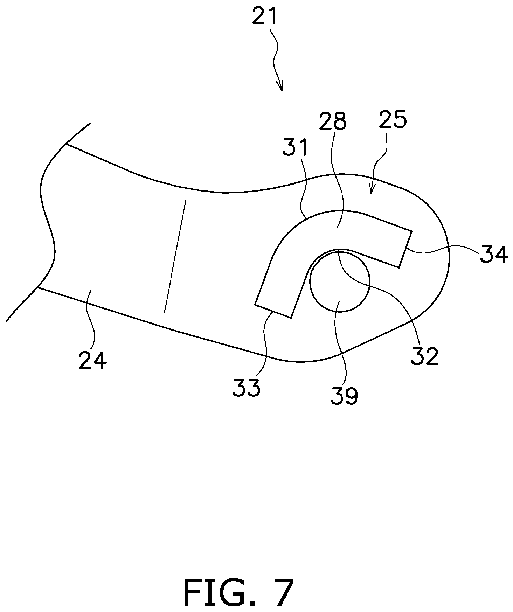

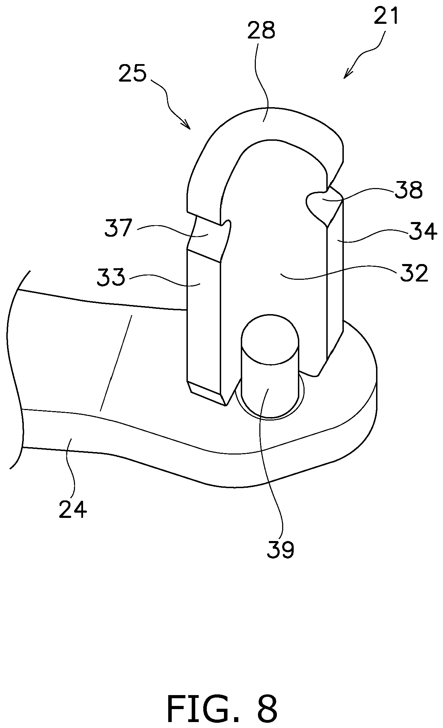

FIGS. 6 to 8 are enlarged views of the pedal body 21 showing the vicinity of the pedal tread portion 25. As shown in FIGS. 6 to 8, the pedal tread portion 25 projects laterally from the arm portion 24. The pedal tread portion 25 is made of sheet metal. The pedal tread portion 25 is connected to the arm portion 24 by, for example, welding. The pedal tread portion 25 has a plate shape that is bent convexly upward.

As shown in FIG. 6, the pedal tread portion 25 includes an inner lateral portion 26 and an outer lateral portion 27. The inner lateral portion 26 is connected to the arm portion 24. The outer lateral portion 27 is arranged further laterally outward than the inner lateral portion 26. The outer lateral portion 27 of the pedal tread portion 25 includes a pedal end 28. The pedal end 28 is located at the outermost lateral side of the pedal tread portion 25. The outer lateral portion 27 has the same width as the inner lateral portion 26 in the front-rear direction of the vehicle. The outer lateral portion 27 and the inner lateral portion 26 have a maximum width in the pedal tread portion 25 in the front-rear direction of the vehicle.

The pedal tread portion 25 includes an upper surface 31, a bottom surface 32, a first edge 33, and a second edge 34. The upper surface 31 has a curved shape convexly upward. The bottom surface 32 has a curved shape concave upward. The first edge 33 and the second edge 34 extend in the left-right direction of the vehicle. The first edge 33 and the second edge 34 extend linearly. The second edge 34 is located opposite the first edge 33. The first edge 33 is located on the front side of the pedal tread portion 25, and the second edge 34 is located on the rear side of the pedal tread portion 25. As shown in FIG. 6, the corner 35 between the first edge 33 and the pedal end 28 is rounded. The corner 36 between the second edge 34 and the pedal end 28 is rounded.

The pedal tread portion 25 includes a first notch 37 and a second notch 38. The first notch 37 is provided in the first edge 33. The first notch 37 has a shape recessed rearward from the first edge 33. The first notch 37 is arranged facing forward. The second notch 38 is provided in the second edge 34. The second notch 38 has a shape recessed forward from the second edge 34. The second notch 38 is arranged facing rearward.

The first notch 37 and the second notch 38 are arranged between the inner lateral portion 26 and the outer lateral portion 27. The first notch 37 and the second notch 38 are arranged side by side in the front-rear direction of the vehicle. The first notch 37 and the second notch 38 are arranged on the outer lateral side of the center of the pedal tread portion 25 in the left-right direction of the vehicle. The first notch 37 and the second notch 38 have a smoothly curved shape.

The pedal body 21 includes a reinforcing member 39. The reinforcing member 39 projects laterally from the arm portion 24. The reinforcing member 39 has a cylindrical shape. The reinforcing member 39 is connected to the arm portion 24 by, for example, welding. The reinforcing member 39 is arranged below the pedal tread portion 25. The reinforcing member 39 is in contact with the bottom surface 32 of the pedal tread portion 25. The reinforcing member 39 supports the pedal tread portion 25 from below.

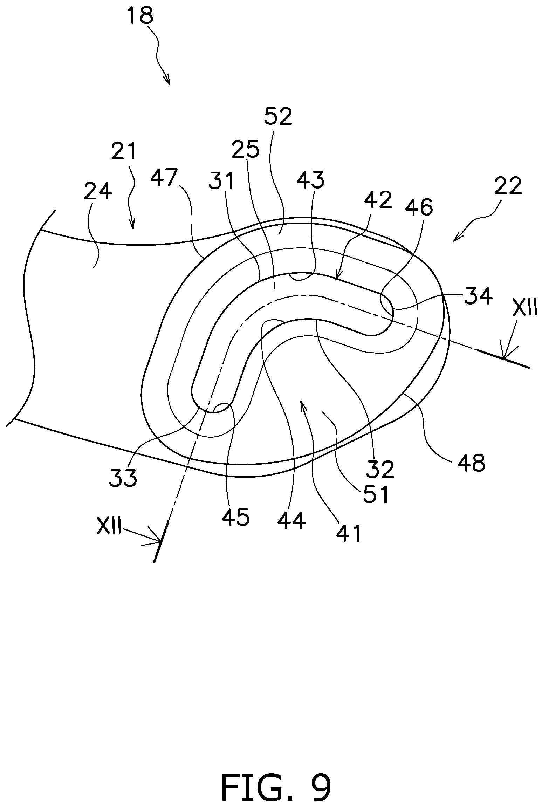

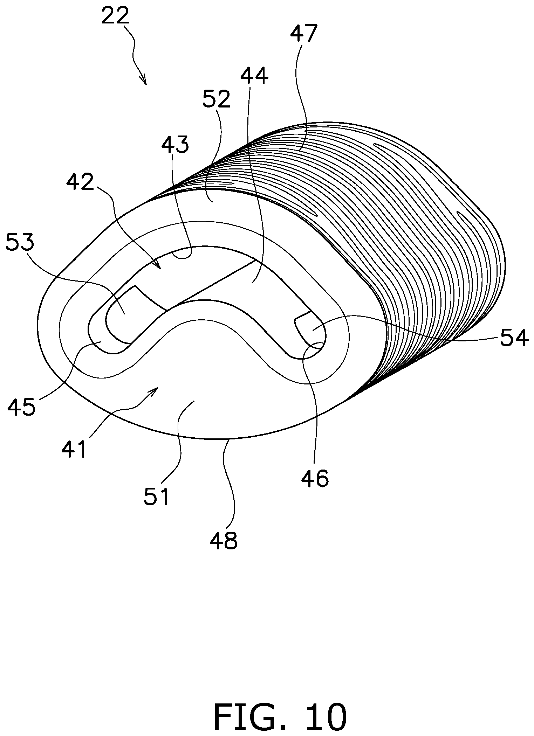

The cover 22 is separate from the pedal body 21. The cover 22 is attached to the pedal body 21. The cover 22 is made of an elastic material such as rubber. The cover 22 covers the pedal tread portion 25. FIG. 9 is an enlarged view of the shift pedal 18 showing the cover 22 and the vicinity of the pedal tread portion 25. FIG. 10 is a perspective view of the cover 22. As shown in FIGS. 9 and 10, the cover 22 has a flattened shape that is longer in the front-rear direction than in the vertical direction.

The cover 22 includes a cover end 41 and a hole 42. The cover end 41 is located at the outermost lateral side of the cover 22. The hole 42 extends in the left-right direction. The hole 42 penetrates the cover 22 in the left-right direction. The hole 42 is open at the cover end 41. Similar to the pedal tread portion 25, the hole 42 has a bent shape convexly upward.

The hole 42 includes an upper inner surface 43, a lower inner surface 44, a front inner surface 45, and a rear inner surface 46. The upper inner surface 43 is curved convexly upward. The lower inner surface 44 is curved convexly upward. The hole 42 extends in a curved line from the front inner surface 45 toward the rear inner surface 46. The pedal tread portion 25 is inserted into the hole 42. The pedal tread portion 25 is press-fitted into the hole 42. Thereby, the cover 22 is attached to the pedal body 21. The upper surface 31 of the pedal tread portion 25 contacts the upper inner surface 43. The bottom surface 32 of the pedal tread portion 25 contacts the lower inner surface 44. The first edge 33 of the pedal tread portion 25 contacts the front inner surface 45. The second edge 34 contacts the rear inner surface 46.

The cover 22 includes an upper curved surface 47 and a lower curved surface 48. The upper curved surface 47 is provided on the upper surface of the cover 22. The upper curved surface 47 is curved convexly upward. The lower curved surface 48 is provided on the lower surface of the cover 22. The lower curved surface 48 is curved convexly downward. The upper curved surface 47 and the lower curved surface 48 are provided with anti-slip grooves. The curvature of the lower curved surface 48 is greater than the curvature of the upper curved surface 47.

The cover 22 includes a lower cover portion 51 and an upper cover portion 52. The lower cover portion 51 is located below the pedal tread portion 25. The lower cover portion 51 is arranged facing the bottom surface 32 of the pedal tread portion 25. The upper cover portion 52 is located above the pedal tread portion 25. The upper cover portion 52 is arranged facing the upper surface 31 of the pedal tread portion 25. The thickness of the lower cover portion 51 in the vertical direction is larger than the thickness of the upper cover portion 52 in the vertical direction.

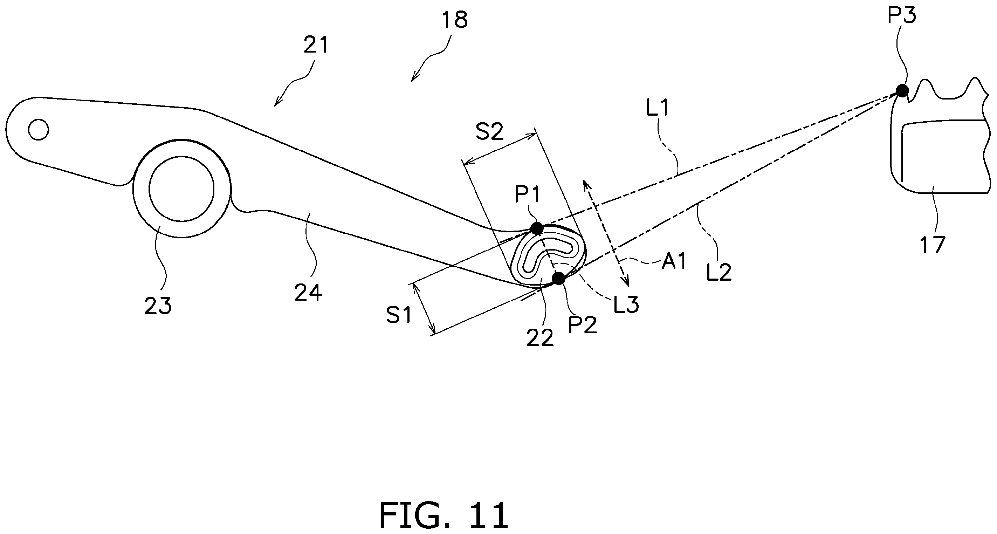

As shown in FIG. 11, a contact point between a first tangent line L1 and the cover 22 is defined as an upper contact point P1 as seen in the vehicle side view. The first tangent line L1 passes through a predetermined position P3 on the foot step 17 and contacts the cover 22 from above. The predetermined position P3 is, for example, the front end of the upper surface of the foot step 17. Alternatively, the predetermined position P3 may be any other position on the upper surface of the foot step 17. As seen in the vehicle side view, a contact point between a second tangent line L2 and the cover 22 is defined as a lower contact point P2. The second tangent line L2 passes through the predetermined position P3 on the foot step 17 and contacts the cover 22 from below. As seen in the vehicle side view, a direction in which a straight line L3 connecting the upper contact point P1 and the lower contact point P2 extends is defined as an operating direction A1 of a rider's foot. As shown in FIG. 11, as seen in the vehicle side view, a dimension S1 of the cover 22 in the operating direction A1 is smaller than a dimension S2 of the cover 22 in a direction perpendicular to the operating direction A1.

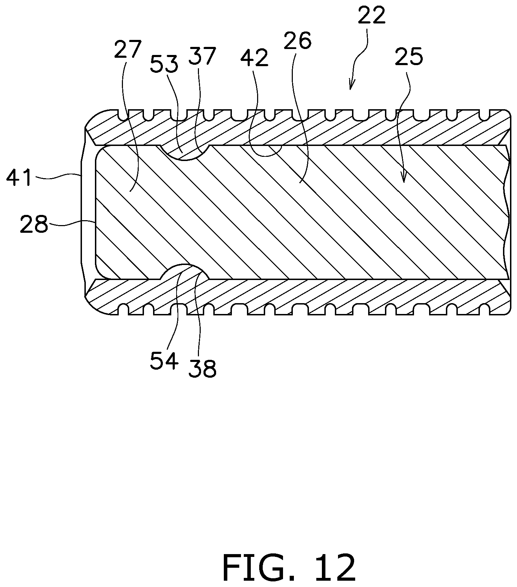

FIG. 12 is a sectional view taken along the line XII-XII of the shift pedal 18 in FIG. 9. As shown in FIG. 12, the pedal tread portion 25 is arranged within the hole 42. The pedal end 28 is arranged further laterally inward than the cover end 41. The cover 22 includes a first protrusion 53 and a second protrusion 54. The first protrusion 53 and the second protrusion 54 protrude from the inner surface of the hole 42. The first protrusion 53 protrudes from the front inner surface 45. The first protrusion 53 is engaged with the first notch 37 within the hole 42. The second protrusion 54 protrudes from the rear inner surface 46. The second protrusion 54 is engaged with the second notch 38 within the hole 42. Thereby, the cover 22 is prevented from coming off from the pedal tread portion 25.

According to the straddled vehicle 1 according to the present embodiment, the pedal tread portion 25 is made of sheet metal and has a bent shape convexly upward. Therefore, compared to the case where the pedal tread portion 25 is cylindrical, the thickness of the pedal tread portion 25 can be made thinner while suppressing a decrease in rigidity. Further, due to the shape of the pedal tread portion 25 described above, it is possible to provide a large thickness of the portion of the cover 22 located below the pedal tread portion 25 while suppressing the overall thickness of the cover 22 from increasing. This improves the operability of the shift pedal 18 while suppressing deterioration in cushioning properties.

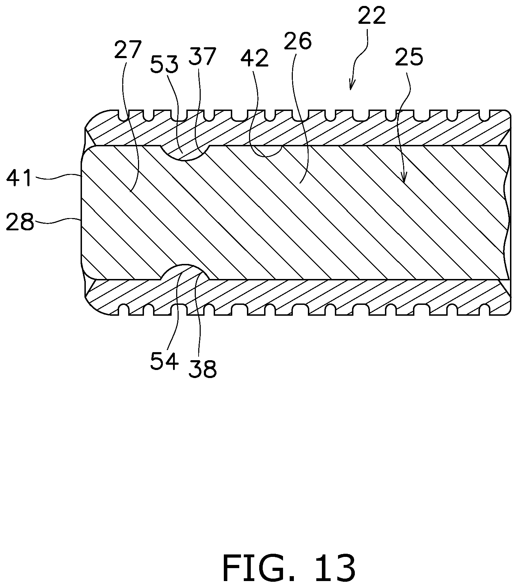

The straddled vehicle 1 is not limited to an off-road type, but may be another type of vehicle such as a street type or a moped. The shape of the shift pedal 18 is not limited to that of the embodiment described above, and may be changed as long as it stays within the scope of the invention, as defined by the appended claims. FIG. 13 is a sectional view of a shift pedal 18 according to a modification. As shown in FIG. 13, the pedal end 28 may be disposed flush with the cover end 41.

The shape of the pedal tread portion 25 is not limited to that of the above embodiment, and may be changed. In the pedal tread portion 25, the first notch 37 and the second notch 38 may be omitted. The shape of the cover 22 is not limited to that of the above embodiment, and may be changed. In the cover 22, the first protrusion 53 and the second protrusion 54 may be omitted.

### Reference signs list

2: Vehicle body, 17: Foot step, 18: Shift pedal, 22: Cover, 23: Shaft portion, 24: Arm portion, 25: Pedal tread portion, 47: Upper curved surface, 48: Lower curved surface, 51: Lower cover portion, 52: Upper cover portion, A1: Operating direction, L1: First tangent line, L2: Second tangent line, P1: Upper contact point, P2: Lower contact point

## Claims

1. A straddled vehicle (1) comprising:
a vehicle body (2); and
a shift pedal (18) attached to the vehicle body (2), wherein
the shift pedal (18) includes
a shaft portion (23) rotatably supported by the vehicle body (2),
an arm portion (24) extending in a front-rear direction of the vehicle from the shaft portion (23),
a pedal tread portion (25) projecting laterally from the arm portion (24), and
a cover (22) that is made of an elastic material and covers the pedal tread portion (25), and
the pedal tread portion (25) is made of sheet metal and has an upwardly curved shape;
wherein the cover (22) includes
an upper curved surface (47) provided on an upper surface of the cover (22) and curved convexly upward, and
a lower curved surface (48) provided on a lower surface of the cover (22) and curved convexly downward.

2. The straddled vehicle according to claim 1, wherein
a bottom surface (32) of the pedal tread portion (25) has a shape concave upward.

3. The straddled vehicle according to claim 1 or 2, wherein
the cover (22) includes
a lower cover portion (51) located below the pedal tread portion (25), and
an upper cover portion (47) located above the pedal tread portion (25), and
a thickness of the lower cover portion (51) in a vertical direction of the vehicle (1) is larger than a thickness of the upper cover portion (47) in the vertical direction.

4. The straddled vehicle according to any one of the foregoing claims, wherein
a curvature of the lower curved surface (48) is greater than a curvature of the upper curved surface (47).

5. The straddled vehicle according to any one of the foregoing claims, further comprising a foot step (17) disposed behind the shift pedal (18), wherein
as seen in a vehicle side view, a contact point between the cover (22) and a first tangent line (L1) that passes through a predetermined position on the foot step (17) and contacts the cover (22) from above is defined as an upper contact point (P1),
as seen in the vehicle side view, a contact point between the cover (22) and a second tangent line (L2) that passes through the predetermined position on the foot step (17) and contacts the cover (22) from below is defined as a lower contact point (P2),
as seen in the vehicle side view, a direction in which a straight line connecting the upper contact point (P1) and the lower contact point (P2) extends is defined as an operating direction of a rider's foot, and
as seen in the vehicle side view, a dimension of the cover (22) in the operating direction is smaller than a dimension of the cover (22) in a direction perpendicular to the operating direction.

## Patentansprüche

1. Spreizsitz-Fahrzeug (1) das umfasst:
eine Fahrzeug-Karosserie (2); sowie
ein Schaltpedal (18), das an der Fahrzeug-Karosserie (2) angebracht ist, wobei
das Schaltpedal (18) einschließt:
einen Wellenabschnitt (23), der über die Fahrzeug-Karosserie (2) drehbar gelagert ist,
einen Armabschnitt (24), der sich in einer Längsrichtung des Fahrzeugs von dem Wellenabschnitt (23) aus erstreckt,
einen Pedal-Trittabschnitt (25), der seitlich von dem Armabschnitt (24) aus vorsteht, sowie
eine Verkleidung (22), die aus einem elastischen Material besteht und den Pedal-Trittabschnitt (25) abdeckt, und
wobei der Pedal-Trittabschnitt (25) aus Blech besteht und eine nach oben gekrümmte Form hat; wobei die Verkleidung (22) einschließt:
eine obere gekrümmte Fläche (47), die an einer Oberseite der Verkleidung (22) vorhanden und konvex nach oben gekrümmt ist, sowie
eine untere gekrümmte Fläche (48), die an einer Unterseite der Verkleidung (22) vorhanden und konvex nach unten gekrümmt ist.

2. Spreizsitz-Fahrzeug nach Anspruch 1, wobei
eine untere Fläche (32) des Pedal-Trittabschnitts (25) eine nach oben konkave Form hat.

3. Spreizsitz-Fahrzeug nach Anspruch 1 oder 2, wobei
die Verkleidung (22) einschließt:
einen unteren Verkleidungsabschnitt (51), der sich unterhalb des Pedal-Trittabschnitts (25) befindet, sowie
einen oberen Verkleidungsabschnitt (47), der sich oberhalb des Pedal-Trittabschnitts (25) befindet, und
wobei eine Dicke des unteren Verkleidungsabschnitts (51) in einer vertikalen Richtung des Fahrzeugs (1) größer ist als eine Dicke des oberen Verkleidungsabschnitts (47) in der vertikalen Richtung.

4. Spreizsitz-Fahrzeug nach einem der vorangehenden Ansprüche, wobei
eine Krümmung der unteren gekrümmten Fläche (48) stärker ist als eine Krümmung der oberen gekrümmten Fläche (47).

5. Spreizsitz-Fahrzeug nach einem der vorangehenden Ansprüche, das des Weiteren eine Fußraste (17) umfasst, die hinter dem Schaltpedal (18) angeordnet ist, wobei
ein Kontaktpunkt zwischen der Verkleidung (22) und einer ersten Tangente (L1), die durch eine vorgegebene Position an der Fußraste (17) hindurch verläuft und mit der Verkleidung (22) von oben in Kontakt kommt, in einer Fahrzeug-Seitenansicht gesehen, als ein oberer Kontaktpunkt (P1) definiert ist,
ein Kontaktpunkt zwischen der Verkleidung (22) und einer zweiten Tangente (L2), die durch eine vorgegebene Position an der Fußraste (17) hindurch verläuft und mit der Verkleidung (22) von unten in Kontakt kommt, in einer Fahrzeug-Seitenansicht gesehen, als ein unterer Kontaktpunkt (P2) definiert ist,
eine Richtung, in der eine gerade Linie verläuft, die den oberen Kontaktpunkt (P1) und den unteren Kontaktpunkt (P2) verbindet, in der Fahrzeug-Seitenansicht gesehen, als eine Betätigungsrichtung eines Fußes des Fahrers definiert ist, und
eine Abmessung der Abdeckung (22) in der Betätigungsrichtung, in der Fahrzeug-Seitenansicht gesehen, kleiner ist als eine Abmessung der Abdeckung (22) in einer Richtung senkrecht zu der Betätigungsrichtung.

## Revendications

1. Véhicule à selle (1) comprenant :
un cadre de véhicule (2) ; et
une pédale de changement de vitesse (18) rattachée au corps de véhicule (2), dans lequel
la pédale de changement de vitesse (18) inclut
une partie d'arbre (23) soutenue en rotation par le cadre de véhicule (2),
une partie de bras (24) s'étendant dans une direction avant-arrière du véhicule depuis la partie d'arbre (23),
une partie de repose-pied de pédale (25) se projetant latéralement depuis la partie de bras (24), et
un capot (22) qui est fait d'un matériau élastique et couvre la partie de repose-pied de pédale (25), et
la partie de repose-pied de pédale (25) est faite d'une feuille de métal et présente une forme incurvée vers le haut ;
dans lequel le capot (22) inclut
une surface incurvée supérieure (47) disposée sur une surface supérieure du capot (22) et incurvée de manière convexe vers le haut, et
une surface incurvée inférieure (48) disposée sur une surface inférieure du capot (22) et incurvée de manière convexe vers le bas.

2. Le véhicule à selle selon la revendication 1, dans lequel
une surface de fond (32) de la partie de repose-pied de pédale (25) présente une forme concave vers le haut.

3. Le véhicule à enfourcher selon revendication 1 ou 2, dans lequel
le capot (22) inclut
une partie de capot inférieure (51) située au-dessous de la partie de repose-pied de pédale (25), et
une partie de capot supérieure (47) située au-dessus de la partie de repose-pied de pédale (25), et
une épaisseur de la partie de capot inférieure (51) dans une direction verticale du véhicule (1) est supérieure à une épaisseur de la partie de capot supérieure (47) dans la direction verticale.

4. Le véhicule à selle selon l'une quelconque des revendications précédentes, dans lequel
une courbure de la surface incurvée inférieure (48) est supérieure à une courbure de la surface incurvée supérieure (47).

5. Le véhicule à selle selon l'une quelconque des revendications précédentes, comprenant en outre un marche-pied (17) disposé derrière la pédale de changement de vitesse (18), dans lequel
tel que visualisé dans une vue latérale de véhicule, un point de contact entre le capot (22) et une première ligne tangente (L1) qui traverse une position prédéterminée sur le marche-pied (17) et entre en contact avec le capot (22) depuis le dessus est défini comme un point de contact supérieur (P1),
tel que visualisé dans la vue latérale de véhicule, un point de contact entre le capot (22) et une deuxième ligne tangente (L2) qui traverse une position prédéterminée sur le marche-pied (17) et entre en contact avec le capot (22) depuis le dessous est défini comme un point de contact inférieur (P2),
telle que visualisée dans la vue latérale de véhicule, une direction dans laquelle une ligne droite connectant le point de contact supérieur (P1) et le point de contact inférieur (P2) s'étend est définie comme une direction de fonctionnement du pied d'un conducteur, et
telle que visualisée dans la vue latérale de véhicule, une dimension du capot (22) dans la direction de fonctionnement est inférieure à une dimension du capot (22) dans une direction perpendiculaire à la direction de fonctionnement.
